# EUROPÄISCHE PATENTSCHRIFT

(11) **EP 0 561 032 B1**
(45) Veröffentlichungstag und Bekanntmachung des Hinweises auf die Patenterteilung: **05.04.1995**
(21) Anmeldenummer: 92112623.1
(22) Anmeldetag: 23.07.1992
(51) Int. Cl.: F24D 11/00, F28D 20/00

(54) **Wärmespeicher als Pufferspeicher für eine Raumheizung**
Heat accumulator as storage buffer for room heating
Accumulateur de chaleur comme accumulateur tampon pour un chauffage de locaux

(30) Priorität: 19.03.1992 DE 4208958
(43) Veröffentlichungstag der Anmeldung: 22.09.1993
(73) Patentinhaber: RATIOTHERM HEIZTECHNIK GmbH, D-91795 Dollnstein (DE)
(72) Erfinder: Kruck, Alfons, D-91795 Dollnstein (DE)
(74) Vertreter: Neubauer, Hans-Jürgen, Dipl.-Phys.

(56) Entgegenhaltungen:
- EP-A- 0 288 695
- WO-A-80/01714
- BE-A- 515 441
- FR-A- 2 363 061

## Beschreibung

Die Erfindung betrifft einen Wärmespeicher als Pufferspeicher für eine Raumheizung nach dem Oberbegriff des Anspruchs 1.

Heizungssysteme mit Wärmespeichern sind in einer Vielzahl von Ausführungen und Anordnungen bekannt, siehe z.B. die EP-A-0 288 695.

In einer bekannten Anordnung (Klöckner-Wärmetechnik) wird ein Wärmespeicher ausschließlich als Brauchwasserspeicher verwendet, der über einen eingesetzten Wärmetauscher durch eine Solaranlage erwärmt wird. In einer anderen Variante ist ebenfalls ein Brauchwasserspeicher vorgesehen, der von mehreren Energieerzeugern, u.a. auch von einer Solaranlage, genutzt wird. Der Wärmetauscher ist hier jedoch außerhalb des Speichers angeordnet und Wasser wird vom Speicher in den Wärmetauscher gepumpt, so daß große Energieverluste vorhanden sind und eine Speicherschichtung mit einem gleichmäßigen, vertikalen Temperaturgefälle durch die Pumpwirkung zunichte gemacht wird. Die Solarenergie wird ausschließlich für die Brauchwassererwärmung eingesetzt. In beiden Varianten werden große Trinkwassermengen erwärmt und über einen längeren Zeitraum im Brauchwasserspeicher gespeichert, was wegen der bekannten, gesundheitlichen Beeinträchtigungen ungünstig ist.

In anderen, bekannten Heizungssystemen (Capito und Thermosolar) werden mehrere Anlagenteile von jeder Energieart genutzt, so daß beispielsweise die Solarenergie auch für Heizzwecke und für die Brauchwassererwärmung zur Verfügung steht. Die Warmwasserbereitung ist hygienisch, da das Trinkwasser nur bei Bedarf von Hochleistungswärmetauschern im Durchflußverfahren erwärmt wird. Hinsichtlich der Energieverwendung bestehen jedoch Nachteile, da beispielsweise bei normalem Heizbetrieb der Wärmespeicher immer auf Temperatur gehalten wird und damit die Möglichkeit, anstehende Solarenergie aufzunehmen, entfällt.

Die Steuerung der bekannten Heizungssysteme erfolgt temperaturabhängig in Verbindung mit Temperaturregelungen, wodurch die Energieerzeuger, wie z.B. Ölheizkessel oder Gasheizkessel, relativ oft ein- und ausgeschaltet werden. Jeder Startvorgang beinhaltet aber einerseits eine ungünstige Energieausnützung und andererseits einen hohen Ausstoß an Schadstoffen, wie Kohlenwasserstoffe, Kohlenmonoxide und Stickoxide.

Aufgabe der Erfindung ist es, einen Wärmespeicher so weiterzubilden, daß eine umweltschonende und verbesserte Ausnützung der Heizenergie möglich wird.

Diese Aufgabe wird mit den Merkmalen des Anspruchs 1 gelöst.

Ein Wärmespeicher als Pufferspeicher für eine Raumheizung besteht aus einem Pufferspeicherbehälter, der mit Heizungswasser als Speichermedium füllbar ist. Weiter hat der Pufferspeicher einen Vorlauf-Eingang zum Anschluß an wenigstens einen Heizkessel als Energieerzeuger und einen Vorlauf-Ausgang zum Anschluß an wenigstens einen Heizkreis als Verbraucher. Weiter ist ein Rücklauf-Eingang zum Anschluß an wenigstens einen Heizkreis und ein Rücklauf-Ausgang zum Anschluß an wenigstens einen Heizkessel am Pufferspeicherbehälter vorgesehen.

Erfindungsgemäß sind der Vorlauf-Eingang und der Vorlauf-Ausgang durch wenigstens ein Vorlaufrohr, das im oberen Bereich im Pufferspeicherbehälter angeordnet ist, miteinander verbunden, wobei dieses Vorlaufrohr verteilt Bohrungen als Durchströmöffnungen zum Pufferspeichervolumen aufweist.

Ein erster (oberer) Rücklauf-Ausgang und der Rücklauf-Eingang sind durch wenigstens ein Rücklaufrohr, das ebenfalls im oberen Bereich, innerhalb des Pufferspeicherbehälters, angeordnet ist, miteinander verbunden, wobei dieses Rücklaufrohr ebenso wie das Vorlaufrohr verteilt Bohrungen als Durchströmöffnungen zum Pufferspeichervolumen aufweist. Zusätzlich ist ein unterer Rücklauf-Ausgang im unteren Bereich des Pufferspeicherbehälters vorgesehen.

Mit dieser Anordnung kann je nach den anliegenden Strömungsverhältnissen über eine starke Strömung durch das Vorlaufrohr und Rücklaufrohr ein angeschlossener Heizkreis bevorzugt beschickt werden oder bei einer Drosselung im Heizkreis über die Durchströmöffnungen der Wärmespeicher mit Energie aufgeladen werden, wobei dann der untere Rücklauf-Ausgang aktiviert ist (wird noch ausführlicher in Verbindung mit Anspruch 9 erläutert).

Mit Anspruch 2 wird eine den Gegebenheiten einer Raumheizung gut entsprechende Dimensionierung der Strömungsquerschnitte im Wärmespeicher angegeben.

Zur Vermeidung eines Strömungskurzschlusses zwischen Vorlaufrohr und Rücklaufrohr dienen die Merkmale nach den Ansprüchen 3 und 4.

Mit den Merkmalen der Ansprüche 5 bis 8 werden zweckmäßige und vorteilhafte Ausführungen von Schichtblechen beansprucht, die einerseits eine Energiespeicherung im unteren Bereich des Pufferspeichers in Verbindung mit einer Schichtung begünstigen bzw. die Zerstörung einer solchen Schichtung durch die Wirkung angeschlossener Pumpen weitgehend verhindern. Die Durchströmöffnungen sind im Vergleich zu den Durchströmöffnungen am Vorlaufrohr und Rücklaufrohr bevorzugt relativ groß zu wählen.

Mit Anspruch 9 wird ein höherer Aufrüstungszustand des Wärmespeichers mit Steuerelementen beansprucht. Der erste (obere) Rücklauf-Ausgang und der untere Rücklauf-Ausgang sind dabei über ein steuerbares Umschaltventil miteinander verbunden, das weiter mit dem Rücklauf des Heizkessels verbunden ist, so daß wahlweise der obere oder untere Rücklauf-Ausgang mit dem Rücklauf des Heizkessels verbindbar ist.

Bei einem eingeschalteten Heizkessel wird ein hoher Energieverbrauch bzw. Energiebedarf in den angeschlossenen Heizkreisen über einen großen Volumenstrom des Heizwassers in den Heizkreisen und/oder eine geringe Rücklauftemperatur von den Heizkreisen erfaßt. In diesem Betriebszustand ist das Umschaltventil auf den oberen Rücklauf-Ausgang geschaltet, wodurch die Energiezufuhr zu den Heizkreisen im wesentlichen direkt durch das Vorlaufrohr (und das Rücklaufrohr) durch den Pufferspeicher hindurch erfolgt, ohne daß die Pufferspeicherfunktion wesentlich berührt wird. Somit ist sichergestellt, daß die Verbraucher (Heizkreise) vorrangig versorgt werden.

Bei einem geringeren Energieverbrauch bzw. Energiebedarf in den Heizkreisen wird beispielsweise durch Schließen der Mischventile oder der Raumthermostatventile ein geringerer Volumenstrom und/oder eine geringere Rücklauftemperatur in den Heizkreisen erfaßt. Der Volumenstrom des Kesselkreises bleibt jedoch weitgehend konstant. Durch diese geänderten Volumenstromverhältnisse erfolgt jetzt über das Vorlaufrohr und das Rücklaufrohr (es könnten auch mehrere solche Rohre parallel eingesetzt sein) ein hydraulischer Ausgleich im Pufferspeicher, wodurch Energie abgepuffert wird.

Für eine solche Pufferung der Energie wird das Umschaltventil auf den unteren Rücklauf-Ausgang geschaltet, wodurch der komplette, untere Bereich des Pufferspeichers durchströmt wird. Dieser untere Bereich des Pufferspeichers schichtet sich nun temperaturgerecht gleichmäßig von oben nach unten durch. Diese Temperaturschichtung wird durch die Anordnung von Schichtblechen begünstigt.

Wenn nun eine bestimmte (hohe) Pufferspeichertemperatur erfaßt wird, wird ein bestimmter (voller) Ladezustand des Pufferspeichers signalisiert und mit Hilfe einer entsprechenden Steuerung der oder die Energieerzeuger (Heizkessel) abgeschaltet. Zweckmäßig läuft dann noch für ca. 3 bis 5 Minuten die Kesselkreispumpe nach, um Restwärme im Kessel abzubauen, worauf dann auch diese abgeschaltet wird. Die angeschlossenen Heizkreise entnehmen nun Heizwasser nur aus dem Pufferspeicher (über angeschlossene Heizkreispumpen).

Wenn dann die Temperatur im Pufferspeicher abgefallen und ein unterer Ladezustand erreicht ist, werden der oder die angeschlossenen Heizkessel wieder eingeschaltet und das Umschaltventil auf den oberen Rücklauf-Ausgang geschaltet. Der untere Ladezustand wird beispielsweise dadurch erfaßt, daß ein Mischer eines beliebigen Heizkreises wieder voll geöffnet ist und dieser Zustand durch einen Schaltkontakt für die Umschaltung weitergemeldet wird. Durch die Umschaltung erfolgt wiederum eine direkte Energiezufuhr durch den Pufferspeicher hindurch zu den Heizkreisen. Damit ist der Anfangszustand wiederhergestellt und der dargestellte Betriebsablauf beginnt von neuem.

Mit der beanspruchten Anordnung und Steuerung werden vorteilhaft maximale Laufzeiten der Energieerzeuger (Heizkessel) erreicht und Startvorgänge der Verbrennungen erheblich verringert, wodurch der Schadstoffausstoß reduziert wird. Weiter wird eine verbesserte Energieausnützung erreicht, da erfindungsgemäß eine bedarfsabhängige Steuerung der Energiezufuhr durchgeführt wird, im Gegensatz zu der bisher bekannten, temperaturabhängigen Steuerung.

Weiter wird vorteilhaft einer Kaminversottung durch die langen Laufzeiten der Energieerzeuger entgegengewirkt. Für die neue Brennwerttechnik ist das erfindungsgemäße System besonders vorteilhaft, da sehr lange ein relativ niedriger Rücklauf einem angeschlossenen Heizkessel zufließt.

In einer weiterführenden Ausbildung der Erfindung gemäß Anspruch 10 wird im unteren Bereich des Pufferspeicherbehälters ein Wärmetauscher angeordnet, der mit einem Solarkollektor verbunden ist.

Am Solarkollektor wird über einen Sensor die Sonneneinstrahlung gemessen. Bei einem bestimmten, für eine Verwertung ausreichenden Einstrahlungswert wird ein angeschlossener, aktiver Energieerzeuger (Heizkessel) sofort abgeschaltet. Heizwasser wird dann nur aus dem Pufferspeicher entnommen, bis eine untere Pufferspeichertemperatur (im unteren Bereich des Pufferspeichers) von ca. 30°C (oder einer ähnlichen, geeignet eingestellten Temperatur) erreicht ist. Dann wird der Heizkessel wieder eingeschaltet und das Umschaltventil auf den oberen Rücklaufausgang geschaltet, so daß eine direkte Energiezufuhr zu den Heizkreisen durch den Pufferspeicher hindurch erfolgt. Zur Pufferung der Energie, die vom Heizkessel zur Verfügung gestellt wird, steht im wesentlichen der obere Bereich des Pufferspeichers, in dem das Vorlaufrohr und Rücklaufrohr angeordnet sind, zur Verfügung, da der untere Bereich durch die Schichtbleche weitgehend abgeschottet ist. Somit steht der untere (bevorzugt größere Bereich unter den Schichtblechen), der auf eine Temperatur von ca. 30°C abgesenkt worden ist, für eine Solarenergiespeicherung zur Verfügung. Durch die relativ niedrige Temperatur ist dieser Bereich nun geeignet, schon eine geringe, anfallende Solarenergie über den Wärmetauscher aufzunehmen.

Steigt nun die Temperatur im unteren Bereich durch die zugeführte Solarenergie an, so strömt erwärmtes Heizwasser im Pufferspeicherbehälter über die Schichtbleche hinaus nach oben (durch Schwerkraft) und wird damit selbsttätig den Verbrauchern zugeführt.

Der oder die Heizkessel werden wieder abgeschaltet, wenn durch die zugeführte Solarenergie die erfaßte Pufferspeichertemperatur (bevorzugt im oberen Bereich der Schichtbleche) auf eine Temperatur, entsprechend der Kesselvorlauftemperatur, angestiegen ist.

Damit ist ein lückenloser Übergang der Energiezufuhr möglich, ohne Komforteinbußen in den beheizten Räumen. Ist die Energiezufuhr der Solaranlage nicht ausreichend, um die Wärmeversorgung insgesamt zu übernehmen, so stellt sich ein Parallelbetrieb von Solaranlage und Heizkessel ein. Erfindungsgemäß wird somit weitgehend unabhängig vom anliegenden Temperaturniveau die gesamte, anstehende Sonnenenergie genutzt und gespeichert. Weiter werden alle Systemteile von jedem der angeschlossenen Energielieferanten nach einer vorgegebenen Priorität ganzjährig genutzt.

In einer erweiterten Ausführungsform nach Anspruch 11 wird über dem Pufferspeicher zusätzlich ein Brauchwasser-Wärmespeicher angeordnet, dessen Brauchwasser-Wärmespeicherbehälter ebenfalls mit Heizwasser gefüllt und mit dem Pufferspeicherbehälter verbunden ist.

Im oberen Bereich des Brauchwasser-Wärmespeicherbehälters ist wenigstens ein Hochleistungswärmetauscher angeordnet, in dem das Brauchwasser im Durchflußprinzip erwärmbar ist. Damit wird keine größere Trinkwassermenge im warmen Zustand über längere Zeit gespeichert.

Der obere Bereich des Brauchwasser-Wärmespeicherbehälters und der obere Bereich des Pufferspeicherbehälters sind durch eine Vorlaufleitung direkt verbunden.

Am unteren Bereich des Brauchwasser-Wärmespeicherbehälters liegt ein Rücklaufanschluß, der über eine Rücklaufleitung mit einem weiteren Umschaltweg des Umschaltventils, das hier als steuerbares Vier-Wege-Umschaltventil ausgebildet ist, verbunden ist.

Der Brauchwasser-Wärmespeicherbehälter ist temperaturgeregelt und im Regelverhalten gegenüber dem Pufferspeicherbehälter vorrangig geschaltet. Dies bedeutet, daß bei einem erfaßten Energiebedarf im Brauchwasser-Wärmespeicherbehälter (abgesunkene Ist-Temperatur gegenüber einer eingestellten Soll-Temperatur) das Vier-Wege-Umschaltventil auf den Rücklauf des Brauchwasser-Wärmespeicherbehälters geschaltet ist. Damit wird über die Vorlauf-Verbindungsleitung im oberen Bereich des Pufferspeichers befindliches, erwärmtes Heizwasser in den darüberliegenden Brauchwasser-Wärmespeicher geführt, da es von dort über den aufgeschalteten Rücklauf abgesaugt wird. Durch den Einsatz des Vier-Wege-Umschaltventils ist nur eine Kesselkreispumpe erforderlich, die die Förderung des Heizwassers zu den jeweils angesteuerten Speicherteilen durchführt. Diese einzige Pumpe führt zur Kostensenkung in der Anschaffung und spart zudem Energiekosten.

Für eine zusätzliche Beschickung des Brauchwasser-Wärmespeichers mit Solarenergie wird nach Anspruch 12 vorgeschlagen, daß auch im unteren Bereich des Brauchwasser-Wärmespeichers ein Wärmetauscher für Solarenergie angeordnet ist. Dieser Wärmetauscher ist mit dem Wärmetauscher für Solarenergie im Pufferspeicherbehälter vorlaufseitig verbunden und rücklaufseitig über ein weiteres, steuerbares Umschaltventil verbunden. Auch hinsichtlich der Versorgung mit Solarenergie ist der temperaturgeregelte Brauchwasser-Wärmespeicher vorrangig gesteuert, was durch eine entsprechende Ansteuerung des Umschaltventils auf den Brauchwasser-Warmespeicher oder Pufferspeicher erfolgt.

Nach Anspruch 13 sind die unteren Bereiche des Brauchwasser-Wärmespeicherbehälters und des Pufferspeicherbehälters durch eine Schwerkraft-Ausgleichsleitung miteinander verbunden, in der ein steuerbares Absperrventil, beispielsweise ein Kugelhahn, angebracht ist. Im Sommer-Betrieb, wenn lediglich Brauchwasser erwärmt werden soll, ist ein Schwerkraftausgleich zwischen dem Brauchwasser-Wärmespeicherbehälter und dem Pufferspeicherbehälter vorhanden, der über das Absperrventil geschlossen oder geöffnet wird. Damit steht das gesamte Speichervolumen beider Speicher im Sommer für die Brauchwassererwärmung zur Verfügung. Durch den Schwerkraftausgleich kann sich eine gleichmäßige Temperaturschichtung im gesamten Speicher (Brauchwasser-Wärmespeicher und Pufferspeicher) einstellen. Wird die im Brauchwasser-Wärmespeicherbehälter an der Temperaturregelung eingestellte Temperatur für das Brauchwasser überschritten, so wird der Schwerkraftausgleich über das Absperrventil elektrisch geschlossen, worauf die Solarenergie weiter im unteren Pufferspeicher gespeichert wird. Damit ist auch bei reinem Solarenergiebetrieb eine gleichmäßige Brauchwassertemperatur gewährleistet, zusammen mit einer bestmöglichen Speicherung anliegender Solarenergie.

Der Aufbau des gesamten Wärmespeichers kann vorteilhaft in einem Baukastensystem erfolgen, wobei beim Nachrüsten von Heizkreisen, Energieerzeuger, Solaranlagen oder Wärmepumpen, die jeweiligen Funktionsteile in Form kompletter, vormontierter Baugruppen an den Speicher montierbar sind. Weiter sind nach Anspruch 14 die verwendeten Bauteile vorteilhaft in einer optisch ansprechenden, blechverkleideten Wärmedämmschale untergebracht, wobei Einzelteile noch zusätzlich mit einer direktanliegenden Wärmedämmung versehen sein können. Die Regel- und Steuerbauteile sind vorteilhaft ebenfalls direkt am Speicher angebaut, wobei die gesamte elektrische Verdrahtung steckerfertig unter der Verkleidung installiert werden kann, so daß bauseits keine elektrische Verdrahtung mehr vorgenommen werden muß und entsprechende Fehlerquellen ausgeschlossen sind.

Anhand eines Ausführungsbeispiels werden weitere Einzelheiten, Merkmale und Vorteile der Erfindung näher erläutert.

Es zeigen
- Fig. 1: ein Blockschaltbild eines Wärmespeichers mit Brauchwasserbereitung mit zwei angeschlossenen Heizkesseln und einem Solarkollektor,
- Fig. 2: einen Vertikalschnitt durch eine erste Ausführungsform eines Pufferspeichers,
- Fig. 3: einen zu Fig. 2 um 90° gedrehten Vertikalschnitt,
- Fig. 4: eine Draufsicht auf eine Schichtblechanordnung nach den Fig. 2 und 3,
- Fig. 5: einen Vertikalschnitt durch ein Schichtblech nach den Fig. 2 und 3,
- Fig. 6: eine radiale Draufsicht auf das Schichtblech nach Fig. 5,
- Fig. 7 und 8: je einen Vertikalschnitt durch eine zweite Ausführungsform eines Pufferspeichers mit eingezeichneter Strömung bei bevorzugtem Heizbetrieb,
- Fig. 9 und 10: Darstellungen entsprechend den Fig. 7 und 8 mit eingezeichneter Strömung beim Pufferbetrieb,

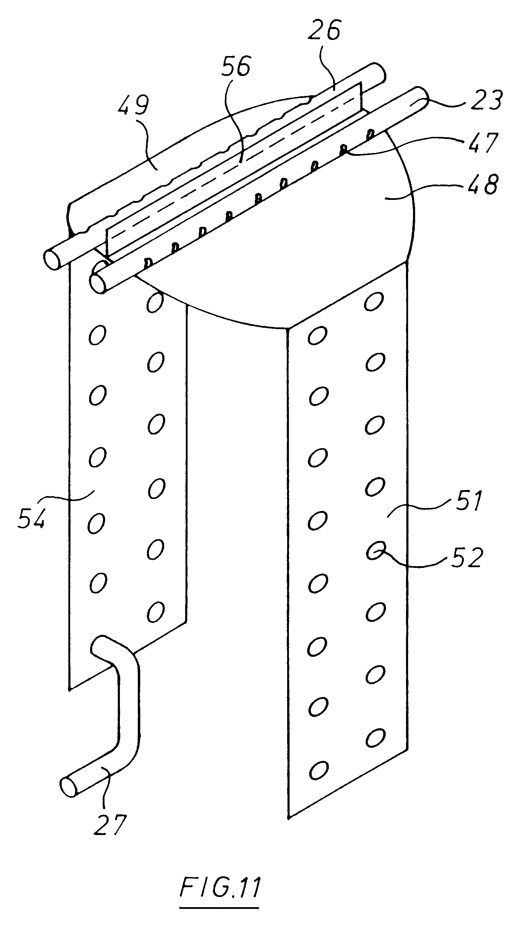

- Fig. 11: eine perspektivische Ansicht einer Schichtblechanordnung nach den Fig. 7 bis 10 und
- Fig. 12: ein Blockschaltbild eines Wärmespeichers mit Raumheizung mit nicht ingetrierter Brauchwasserbereitung.

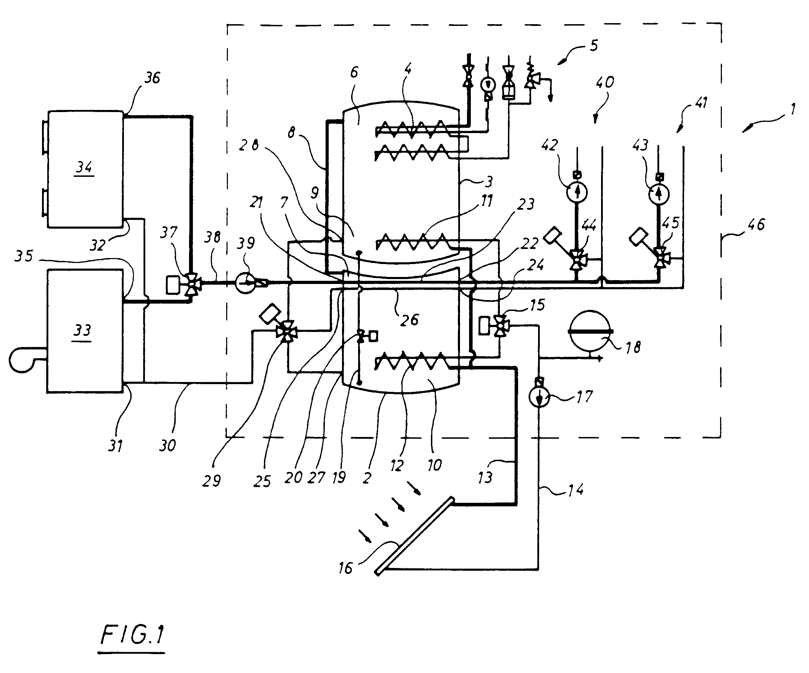

In Fig. 1 ist ein Wärmespeicher 1 dargestellt, mit einem Pufferspeicherbehälter 2 und einem darüber angeordneten Brauchwasser-Wärmespeicherbehälter 3.

Im oberen Bereich des Brauchwasser-Wärmespeicherbehälters 3 sind mehrere Hochleistungswärmetauscher 4 angeordnet, in denen das Brauchwasser im Durchflußprinzip erwärmbar ist. Zudem sind die für die Brauchwasserbereitung erforderlichen Geräte und Armaturen 5 eingezeichnet.

Der obere Bereich 6 des Brauchwasser-Wärmespeicherbehälters 3 ist mit dem oberen Bereich 7 des Pufferspeicherbehälters 2 über eine Vorlaufleitung 8 direkt verbunden. Im unteren Bereich 9 des Brauchwasserspeichers 3 und im unteren Bereich 10 des Pufferspeicherbehälters 2 sind jeweils ein Wärmetauscher 11 und 12 angeordnet, die beide vorlaufseitig 13 parallel und rücklaufseitig 14 über ein steuerbares Drei-Wege-Umschaltventil 15 verbunden sind, wobei Vor- und Rücklauf 13, 14 mit einem Solarkollektor 16 verbunden sind und in der Rücklaufleitung zudem eine Umwälzpumpe 17 und ein Ausdehnungsgefäß 18 angeordnet sind.

Der untere Bereich 9 des Brauchwasser-Wärmespeicherbehälters 3 und der untere Bereich 10 des Pufferspeicherbehälters 2 sind zudem über eine Schwerkraft-Ausgleichsleitung 19 verbunden, in der ein steuerbares Absperrventil 20 angeordnet ist.

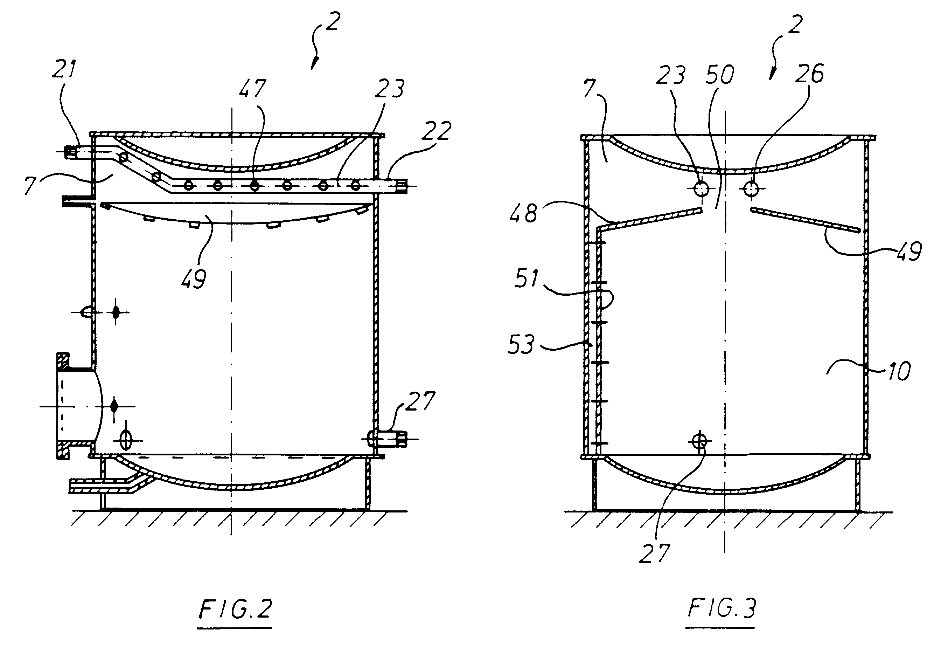

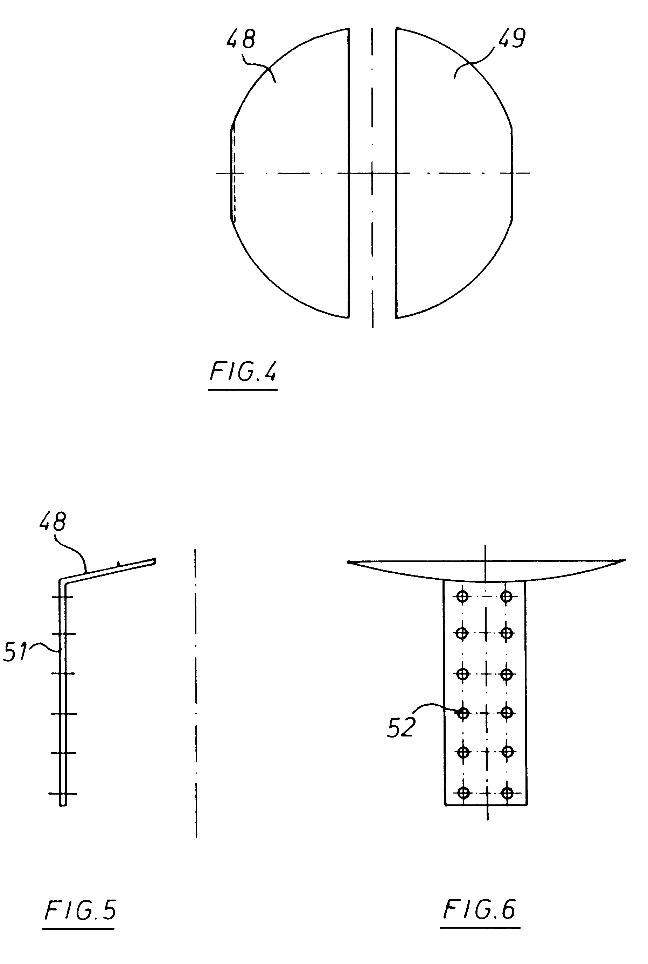

Ein Vorlauf-Eingang 21 und ein gegenüberliegender Vorlauf-Ausgang 22 im oberen Bereich 7 des Pufferspeicherbehälters 2 sind über ein Vorlaufrohr 23 verbunden. Ebenso ist ein dazu in einer Horizontalebene liegender Rücklauf-Eingang 24 mit einem Rücklauf-Ausgang 25 über ein Rücklaufrohr 26 verbunden. Die Gestalt des Vorlaufrohrs 23 und des Rücklaufrohrs 26 sind in Verbindung mit den Fig. 2 und 3 näher erläutert. Unter dem Vorlaufrohr 23 und dem Rücklaufrohr 26 sind in Fig. 1 nicht dargestellte Schichtbleche angebracht, die in Verbindung mit den Fig. 2 bis 6 näher dargestellt werden (in Fig. 1 sind zum besseren Verständnis Vorlaufleitungen mit stärkerer Strichstärke als Rücklaufleitungen gezeichnet).

Neben dem Rücklauf-Ausgang 25 im oberen Bereich 7 des Pufferspeicherbehälters 2 ist noch ein weiterer Rücklauf-Ausgang 27 in dessen unterem Bereich 10 angebracht sowie ein Rücklauf-Ausgang 28 im unteren Bereich 9 des Brauchwasser-Wärmespeicherbehälters 3. Alle drei Rücklauf-Ausgänge 25, 27, 28 sind über Rücklaufleitungen mit einem steuerbaren Vier-Wege-Umschaltventil 29 verbunden, das zudem über eine Rücklaufleitung 30 Verbindung mit den Rücklauf-Eingängen 31, 32 eines angeschlossenen Heizkessels 33 für Gas oder Öl und eines alternativ oder parallel betreibbaren Heizkessels 34 für Festbrennstoffe hat.

Die Vorlauf-Ausgänge 35, 36 der Heizkessel 33 und 34 sind über ein steuerbares Drei-Wege-Umschaltventil 37 verbunden und auf eine Vorlaufleitung 38 mit einer Kesselkreispumpe 39 geschaltet, wobei die Vorlaufleitung 38 mit dem Vorlauf-Eingang 21 am Pufferspeicherbehälter 2 Verbindung hat.

Mit dem Vorlauf-Ausgang 22 und dem Rücklauf-Eingang 24 sind zwei Heizkreise 40, 41 verbunden, von denen je eine Umwälzpumpe 42, 43 und ein steuerbarer Mischer 44, 45 dargestellt sind.

Alle beschriebenen Teile mit Ausnahme der Heizkessel 33, 34, des Drei-Wege-Umschaltventils 37 und des Solarkollektors 16 sind in einer geschlossenen Wärmedämmschale untergebracht, die schematisch als Block 46 dargestellt ist.

In den Fig. 2 und 3 ist jeweils ein gegeneinander drehversetzter Vertikalschnitt durch eine erste Ausführungsform des Pufferspeicherbehälters 2 mit weiteren Einzelheiten dargestellt. Es ist vor allem zu erkennen, daß das Vorlaufrohr 23 und das Rücklaufrohr 26 im oberen Bereich 7 des Pufferspeicherbehälters 2 in einer Horizontalebene eng nebeneinander liegen.

Das Vorlaufrohr 23 und das Rücklaufrohr 26 enthalten über ihre Länge verteilt und in einer Horizontalebene liegend und voneinander wegweisende Durchströmöffnungen 47, die je nach Strömungsverhältnissen ein Aus- oder Einströmen von oder zum Pufferspeichervolumen des Heizwassers ermöglichen.

Weiter wird die Gestalt und Anordnung von Schichtblechen 48 und 49 aus den Fig. 2 und 3 in Verbindung mit den Fig. 2 bis 6 näher erläutert. Es sind zwei Schichtbleche 48, 49 vorgesehen, die den unteren, größeren Bereich 10, ca. 3/4 des Volumens, und den oberen Bereich 7, ca. 1/4 des Volumens, voneinander trennen, mit einem dazwischenliegenden Spalt 50 als Durchströmöffnung. Die oberen Teilbleche sind plan und dachförmig zur Mitte bzw. zum Spalt 50 hin angestellt. Das Schichtblech 48 ist mit einem vertikalen, seitlichen Wandteil 51 in einem Abstand von der Innenwand des Pufferspeicherbehälters 2 nach unten geführt und dort mit Durchströmöffnungen 52 versehen, so daß sich ein vertikaler Strömungskanal 53 ergibt.

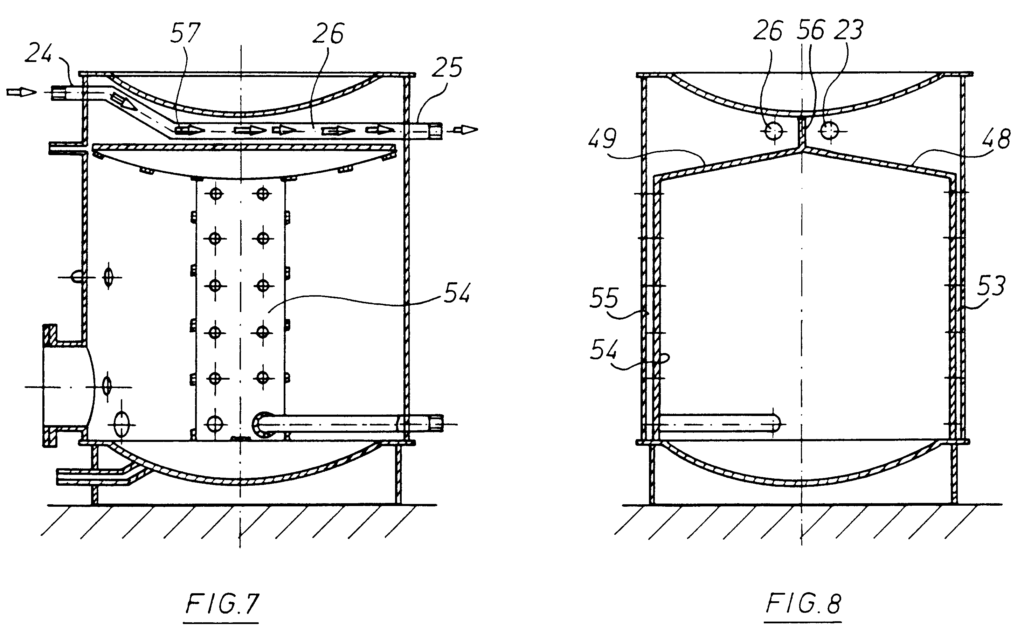

In den Fig. 7 bis 10 ist eine zweite Ausführungsform eines Pufferspeichers dargestellt, der der ersten Ausführungsform mit einer geänderten Schichtblechanordnung entspricht (gleiche Teile sind mit gleichen Bezugszeichen versehen). Die Ausführung der Schichtbleche 48 sowie des seitlichen Wandteils 51 mit den Durchströmöffnungen 52 entspricht der ersten Ausführungsform, wodurch ein vertikaler Strömungskanal 53 unterhalb des Vorlaufrohrs 23 gebildet ist. Eine entsprechende Anordnung ist hier in Verbindung mit dem Schichtblech 49 vorgesehen, wobei dieses durch ein weiteres, seitliches Wandteil 54 nach unten verlängert ist, so daß gegenüber dem Strömungskanal 53 ein weiterer Strömungskanal 55 gebildet ist. Das seitliche Wandteil 54 weist ebenfalls Durchströmbohrungen 52 auf.

Die Schichtbleche 48 und 49 sind hier unter Vermeidung des Spaltes 50 in der Mitte zwischen dem Vorlaufrohr 23 und dem Rücklaufrohr 26 miteinander verbunden und durch ein vertikales Zwischenblech 56 nach oben hin zwischen die beiden Rohre verlängert.

Die Funktion der dargestellten Anordnung wird insbesondere anhand der Fig. 1 und 7 bis 10 dargestellt: Der Brauchwasser-Wärmespeicherbehälter 3 ist temperaturgeregelt und wird von allen Energielieferanten 33, 34, 16 durch entsprechende Schaltung des Vier-Wege-Umschaltventils 29 (Verbindung mit dem Rücklauf-Ausgang 28) und des Drei-Wege-Umschaltventils 15 (Verbindung mit dem Wärmetauscher 11) vorrangig mit Energie beschickt.

Bei wenigstens einem eingeschalteten Heizkessel 33, 34 und einem hohen Energieverbrauch in den angeschlossenen Heizkreisen 40, 41 ergibt sich ein großer Volumenstrom des Heizwassers durch das Vorlaufrohr 23 und das Rücklaufrohr 26 (das Vier-Wege-Umschaltventil 29 ist auf den Rücklauf-Ausgang 25 geschaltet) sowie eine relativ geringe Rücklauftemperatur von den Heizkreisen. Wegen des hohen Volumenstroms im Vorlaufrohr 23 und im Rücklaufrohr 26 strömt nur wenig Heizwasser aus den Durchströmöffnungen 47 aus und die Heizkreise werden im wesentlichen direkt mit Energie versorgt (dargestellt in den Fig. 7 und 8 durch die Strömungspfeile 57, die eine direkte Strömung nur durch das Vorlaufrohr 23 und Rücklaufrohr 26 angeben sollen).

Verändert sich die Energieabnahme der Heizkreise 40, 41, beispielsweise durch Schließen der Mischer 44, 45, so stellt sich ein verringerter Volumenstrom des Heizwassers von den Heizkreisen 40, 41 ein, während der Volumenstrom des Kesselkreises, insbesondere aufgrund der Pumpwirkung der Kesselkreispumpe 39, im wesentlichen unverändert bleibt. Dadurch strömt vermehrt Heizwasser aus den Durchströmöffnungen 47 des Vorlaufrohrs 23 bzw. in das Rücklaufrohr 26.

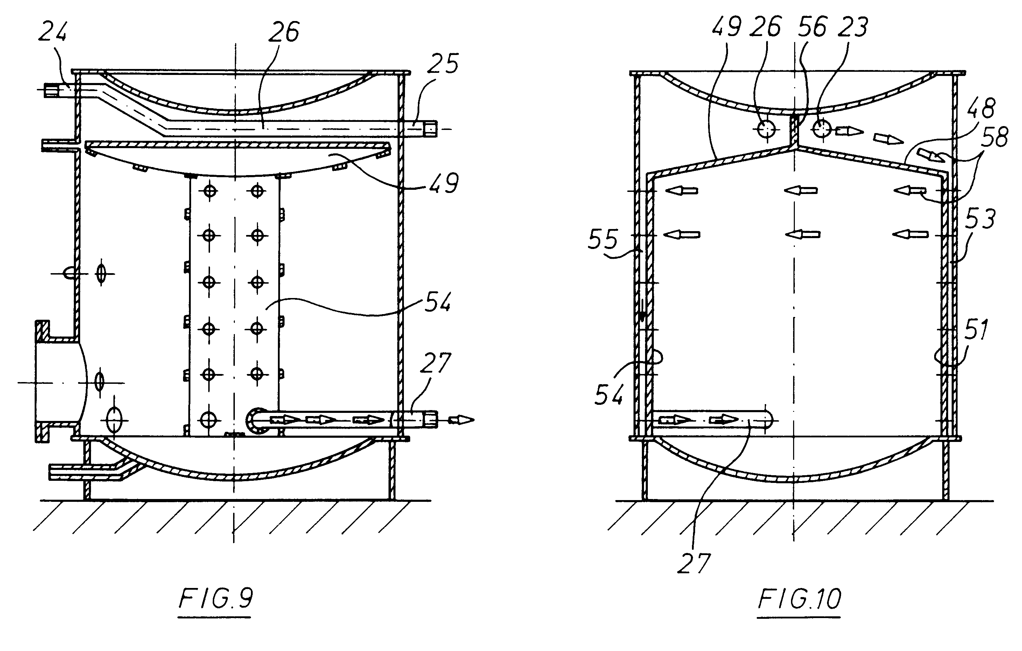

Wenn dieser Zustand erfaßt wird, so wird über das Vier-Wege-Umschaltventil 29 der Rücklauf auf den Rücklauf-Ausgang 27 im unteren Bereich 10 des Pufferspeicherbehälters 2 geschaltet. Damit wird der komplette, untere Teil 10 durchströmt und schichtet sich nun temperaturgerecht gleichmäßig von oben nach unten durch. Durch die Schichtbleche 48, 49 und deren spezielle Anordnung wird eine turbulente Durchmischung unterbunden. Dieser Zustand ist in den Fig. 9 und 10 gezeigt, wo im Rücklaufrohr 26 keine Strömung fließt und aus den Durchströmöffnungen im Vorlaufrohr 26 warmes Heizwasser ausströmt (Strömungspfeile 58), über den Strömungskanal 53 und dessen Öffnungen 52 in einer horizontalen Richtung in den Strömungskanal 55 und von dort zum unteren Rücklauf-Ausgang 27 gelangt.

Ist der Pufferspeicher 2 voll mit Heizenergie geladen, werden die Kessel 33, 34 abgeschaltet, wobei die Kesselkreislaufpumpe 39 noch wenige Minuten zum Abbau von Restwärme weiterläuft.

Die Heizkreise 40, 41 entnehmen mit Hilfe ihrer Umwälzpumpen 42, 43 nun die benötigte Energie aus dem Pufferspeicherbehälter 2 so lange, bis die Temperatur soweit abgefallen ist, daß ein Mischer 44, 45 wieder voll geöffnet ist, worauf dann wenigstens einer der Kessel 33 oder 34 wieder eingeschaltet wird. Gleichzeitig wird auch die Kesselkreispumpe 39 eingeschaltet und das Vier-Wege-Umschaltventil 29 wieder auf den oberen Rücklauf-Ausgang 25 geschaltet, wodurch wieder eine direkte Energiezufuhr, wie vorstehend erläutert, zu den Heizkreisen 40, 41 erfolgt.

Für einen ausschließlichen oder zusätzlichen, unterstützenden Solarbetrieb wird am Solarkollektor 16 die Sonneneinstrahlung gemessen. Bei einem Wert bestimmter Höhe, der eine verwertbare Solarenergie signalisiert, werden die Kessel 33, 34 abgeschaltet. Die Heizkreise 40, 41 entnehmen nun die Heizenergie aus dem Pufferspeicherbehälter 2 so lange, bis dessen Temperatur auf ca. 30°C abgesunken ist. Anschließend werden wieder beide oder ein Heizkessel 33, 34 eingeschaltet und die Energiezufuhr zu den Heizkreisen 40, 41 wieder direkt (Umschaltung des Vier-Wege-Umschaltventils 29 auf den oberen Rücklauf-Ausgang 25) frei gegeben. Zur Pufferung der Heizenergie, welche von den Heizkesseln 33, 34 zur Verfügung gestellt wird, steht der obere Bereich 7 des Pufferspeicherbehälters 2 zur Verfügung, was durch die Anordnung der Schichtbleche 48, 49 bedingt ist. Das restliche Volumen des unteren Bereichs 10, das auf eine Temperatur von ca. 30°C abgesenkt worden ist, kann nun geringe Beträge an Solarenergie über den Wärmetauscher 12 aufnehmen.

Wenn nun die Temperatur im unteren Bereich 10 aufgrund der zugeführten Solarenergie ansteigt, so strömt das erwärmte Heizwasser durch Schwerkraft nach oben und wird selbsttätig damit den Heizkreisen 40, 41 zur Verfügung gestellt. Wenn ein Temperaturniveau erreicht wird, das den vorgegebenen Kesseltemperaturen entspricht, so werden die Heizkessel 33, 34 abgeschaltet und die Solareinrichtung übernimmt allein die Energiezufuhr. Ist die Energiezufuhr von der Solaranlage nicht ausreichend, erfolgt ein Parallelbetrieb.

Für den Sommer-Betrieb, bei dem die Heizkreise 40, 41 abgeschaltet sind und nur eine Brauchwassererwärmung erforderlich ist, erfolgt ein Schwerkraftausgleich zwischen dem Pufferspeicherbehälter 2 und dem Brauchwasser-Wärmespeicherbehälter 3 über die Schwerkraft-Ausgleichsleitung 19. Der Schwerkraftausgleich wird mit dem steuerbaren Absperrventil 20 geschlossen oder geöffnet. Durch den Schwerkraftausgleich kann sich eine gleichmäßige Temperaturschichtung im Gesamtvolumen des Pufferspeicherbehälters 2 und des Brauchwasser-Wärmespeicherbehälters 3 einstellen. Wird die am Temperaturregler vorgegebene Temperatur für das Brauchwasser überschritten, so wird der Schwerkraftausgleich über das Absperrventil 20 geschlossen und weiter zugeführte Solarenergie wird weiterhin im Pufferspeicherbehälter 2 gespeichert.

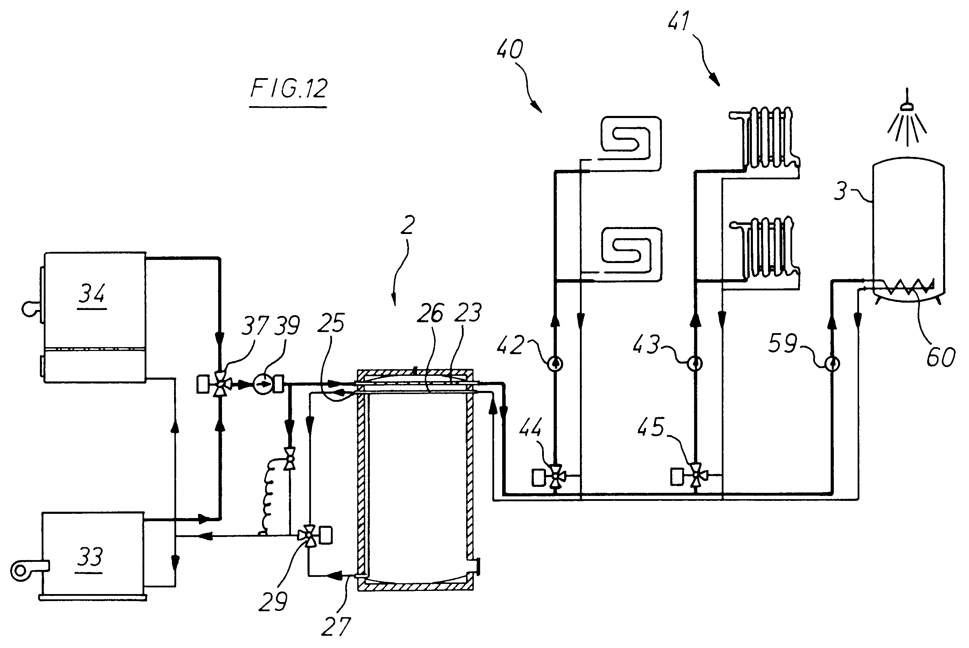

In Fig. 12 ist ein Blockschaltbild einer Raumheizung mit einem Wärmespeicher gezeigt, bei der die Brauchwasserbereitung nicht, wie in Fig. 1, in den Wärmespeicher integriert ist. Dies soll insbesondere zeigen, daß ein erfindungsgemäßer Pufferspeicher 2 auch einfach in eine beispielsweise bereits bestehende Heizung nachträglich mit integriert werden kann. Die Funktion ist im wesentlichen die gleiche, so daß auch hier zwei Heizkessel 33, 34, ein Drei-Wege-Umschaltventil 37, eine Kesselkreispumpe 39 und ein Umschaltventil 29 zur Umschaltung von einem oberen Rücklauf-Ausgang 25 auf einen unteren Rücklauf-Ausgang 27 vorgesehen sind. Im Pufferspeicher 2 sind auch hier ein Vorlaufrohr 23 und ein Rücklaufrohr 26 mit Durchströmbohrungen in einem oberen Bereich des Speichervolumens angebracht (Schichtbleche können auch hier in der beschriebenen Weise angeordnet sein). Am Pufferspeicher 2 sind zwei Heizkreise 40, 41 als Bodenheizung und mit Heizkörpern über steuerbare Mischer 44, 45 und Umwälzpumpen 42, 43 angeschlossen. Weiter ist über eine Umwälzpumpe 59 ein Wärmetauscher 60 in einem separaten Brauchwasserwärmespeicherbehälter 3 angeschlossen. Die Funktion der Anordnung entspricht der nach Fig. 1, wobei die Brauchwassererwärmung einfach über die Umwälzpumpe 59 und den Wärmetauscher 60 gesteuert erfolgt.

## Patentansprüche

1. Wärmespeicher als Pufferspeicher für eine Raumheizung,
mit einem Pufferspeicherbehälter (2), der mit Heizungswasser als Speichermedium füllbar ist,
mit einem Vorlauf-Eingang (21) zum Anschluß an wenigstens einen Heizkessel (33,34) als Energieerzeuger und einem Vorlauf-Ausgang (22) zum Anschluß an wenigstens einen Heizkreis (42,43) als Verbraucher,
mit einem Rücklauf-Eingang (24) zum Anschluß an wenigstens einen Heizkreis (42,43) und einem Rücklauf-Ausgang (25) zum Anschluß an wenigstens einen Heizkessel (33,34),
dadurch gekennzeichnet,
daß der Vorlauf-Eingang (21) und der Vorlauf-Ausgang (22) durch wenigstens ein Vorlaufrohr (23), das im oberen Bereich (7) innerhalb des Pufferspeicherbehälters (2) angeordnet ist, miteinander verbunden sind, wobei dieses Vorlaufrohr (23) verteilt Bohrungen als Durchströmöffnungen (47) zum Pufferspeichervolumen aufweist,
daß der Rücklauf-Ausgang (25) und der Rücklauf-Eingang (24) durch wenigstens ein Rücklaufrohr (26), das ebenfalls im oberen Bereich innerhalb des Pufferspeicherbehälters (2) angeordnet ist, miteinander verbunden sind, wobei dieses Rücklaufrohr (26) ebenso wie das Vorlaufrohr (23) verteilt Bohrungen als Durchströmöffnungen (47) zum Pufferspeichervolumen aufweist und
daß ein zweiter Rücklauf-Ausgang (27) im unteren Bereich (10) des Pufferspeicherbehälters (2) als Verbindung zum Pufferspeichervolumen vorgesehen ist.

2. Wärmespeicher nach Anspruch 1, dadurch gekennzeichnet, daß der Querschnitt des Vorlaufrohrs (23) bzw. des Rücklaufrohrs (26) etwa der Summe der Querschnitte der darin angebrachten Durchströmöffnungen (47) entspricht.

3. Wärmespeicher nach Anspruch 1 oder 2, dadurch gekennzeichnet, daß die Durchströmöffnungen (47) am Vorlaufrohr (23) und am Rücklaufrohr (26) in einer Horizontalebene liegen und voneinander weg jeweils zur Außenseite des Pufferspeichers hin weisen.

4. Wärmespeicher nach einem der Ansprüche 1 bis 3, dadurch gekennzeichnet, daß zwischen dem Vorlaufrohr (23) und dem Rücklaufrohr (26) zumindest über einen Teil deren Länge ein horizontales Zwischenblech (56) angeordnet ist.

5. Wärmespeicher nach einem der Ansprüche 1 bis 4, dadurch gekennzeichnet, daß wenigstens ein Schichtblech (48, 49) zwischen einem oberen Bereich (7) mit dem Vorlaufrohr (23) und Rücklaufrohr (26) und einem unteren, größeren Bereich (10) (bevorzugt ca. 3/4 des Pufferspeichervolumens) des Pufferspeicherbehälters (2) angeordnet und mit Durchströmöffnungen (50, 52) zwischen diesen Bereichen versehen ist.

6. Wärmespeicher nach Anspruch 5, dadurch gekennzeichnet, daß das Schichtblech aus zwei Teilblechen (48, 49) besteht, die einen Großteil des Speicherquerschnitts horizontal abdecken und die plan und dachförmig zur Mitte hin angestellt sind, wo das Vorlaufrohr (23) und das Rücklaufrohr (26) in einem im Vergleich zum Speicherdurchmesser geringen Abstand angeordnet sind.

7. Wärmespeicher nach Anspruch 5 oder 6, dadurch gekennzeichnet,
daß wenigstens ein Teilblech (48, 49) mit einem vertikalen, seitlichen Wandteil (51, 54) nach unten geführt ist und
daß das Wandteil (51, 54) in einem Abstand von der Innenwand des Pufferspeicherbehälters (2) liegt und zur Innenseite hin mit vertikal versetzten Durchströmöffnungen (52) ausgeführt ist, so daß sich ein vertikaler Strömungskanal (53, 55) ergibt.

8. Wärmespeicher nach Anspruch 7, dadurch gekennzeichnet,
daß die Wandteile (51, 54) gegenüber liegen und
daß der Strömungskanal (55), der dem Rücklaufrohr (26) zugeordnet ist bzw. unter diesem liegt mit dem unteren Rücklaufausgang (27) verbunden ist.

9. Wärmespeicher nach einem der Ansprüche 1 bis 8, dadurch gekennzeichnet,
daß der erste Rücklauf-Ausgang (oberer Rücklauf-Ausgang 25) und der zweite Rücklauf-Ausgang (unterer Rücklauf-Ausgang 27) über ein steuerbares Umschaltventil (29) verbunden sind, das weiter mit dem Rücklauf (30) des Heizkessels (33, 34) verbunden ist,
daß bei eingeschaltetem Heizkessel (33, 34) und einem hohen Energieverbrauch in dem oder den angeschlossenen Heizkreisen (40, 41) entsprechend einem erfaßten, großen Volumenstrom des Heizwassers in den Heizkreisen (40, 41) und/oder einer erfaßten, geringen Rücklauftemperatur von den Heizkreisen (40, 41), das Umschaltventil (29) zur Verbindung mit dem oberen Rücklauf-Ausgang (25) geschaltet ist,
daß bei einem geringeren Energieverbrauch, entsprechend einem erfaßten, geringeren Volumenstrom des Heizwassers in den Heizkreisen (40, 41) und/oder einer erfaßten, geringeren Rücklauftemperatur von den Heizkreisen (40, 41), das Umschaltventil (29) für eine Speicherung und Pufferung von Heizenergie zu einer Verbindung mit dem unteren Rücklauf-Ausgang (27) geschaltet ist und
daß bei einer bestimmten Pufferspeichertemperatur im Pufferspeicherbehälter (2), entsprechend einem bestimmten, vollen Ladezustand der Heizkessel (33, 34) abgeschaltet wird und Heizwasser nur aus dem Pufferspeicher (2) von den Heizkreisen (40, 41) entnommen wird, bis ein unterer Ladezustand des Pufferspeichers (2) erreicht ist, worauf der Heizkessel (33, 34) wieder eingeschaltet und das Umschaltventil (29) auf den oberen Rücklauf-Ausgang (25) geschaltet wird.

10. Wärmespeicher nach Anspruch 9, dadurch gekennzeichnet,
daß im unteren Bereich (10) des Pufferspeicherbehälters (2) ein Wärmetauscher (12) angeordnet ist, der mit einem Solarkollektor (16) verbunden ist,
daß am Solarkollektor (16) über einen Sensor die Sonneneinstrahlung gemessen wird und bei einem bestimmten, für eine Verwertung ausreichenden Einstrahlungswert durch eine Schaltungsanordnung der Heizkessel (33, 34) abgeschaltet wird und Heizwasser von den Heizkreisen (40, 41) nur aus dem Pufferspeicher (2) entnommen wird, bis eine untere Pufferspeichertemperatur von bevorzugt ca. 30°C erreicht ist, worauf der Heizkessel (33, 34) wieder eingeschaltet und das Umschaltventil (29) auf den oberen Rücklauf-Ausgang (25) geschaltet ist und
daß der Heizkessel (33, 34) wieder abgeschaltet wird, wenn durch die zugeführte Solarenergie die erfaßte Pufferspeichertemperatur auf eine Temperatur entsprechend der Kesselvorlauftemperatur angestiegen ist.

11. Wärmespeicher nach einem der Ansprüche 9 oder 10, dadurch gekennzeichnet,
daß über dem Pufferspeicher zusätzlich ein Brauchwasser-Wärmespeicher angeordnet ist, dessen Brauchwasser-Wärmespeicherbehälter (3) ebenfalls mit Heizwasser gefüllt und mit dem Pufferspeicherbehälter (2) verbunden ist,
daß im oberen Bereich des Brauchwasser-Wärmespeicherbehälters (3) wenigstens ein Hochleistungs-Wärmetauscher (4) angeordnet ist, in dem das Brauchwasser im Durchflußprinzip erwärmbar ist,
daß der obere Bereich (6) des Brauchwasser-Wärmespeicherbehälters (3) und der obere Bereich (7) des Pufferspeicherbehälters (2) durch eine Vorlaufleitung (8) direkt verbunden sind,
daß am unteren Bereich (9) des Brauchwasser-Wärmespeicherbehälters (3) ein Rücklauf-Ausgang (28) liegt, der über eine Rücklaufleitung mit einem weiteren Umschaltweg des Umschaltventils, das hier als steuerbares Vier-Wege-Umschaltventil (29) ausgebildet ist, verbunden ist und
daß der Brauchwasser-Wärmespeicherbehälter (3) gegenüber dem Pufferspeicherbehälter (2) bevorzugt temperaturgeregelt ist, so daß bei einem erfaßten Energiebedarf im Brauchwasser-Wärmespeicherbehälter (3) das Vier-Wege-Umschaltventil (29) auf den Rücklauf-Ausgang (28) des Brauchwasser-Wärmespeicherbehälters (3) geschaltet ist.

12. Wärmespeicher nach Anspruch 11, dadurch gekennzeichnet,
daß auch im unteren Bereich (9) des Brauchwasser-Wärmespeicherbehälters (3) ein Wärmetauscher (11) für Solarenergie angeordnet ist, der mit dem Wärmetauscher (12) für Solarenergie im Pufferspeicherbehälter (2) vorlaufseitig (13) verbunden und rücklaufseitig (14) über ein weiteres, steuerbares Umschaltventil (15) verbunden ist und
daß der temperaturgeregelte Brauchwasser-Wärmespeicher (3) vorrangig gegenüber dem Pufferspeicher (2) mit Solarenergie durch entsprechende Steuerung des Umschaltventils (15) versorgt wird.

13. Wärmespeicher nach Anspruch 12, dadurch gekennzeichnet,
daß die unteren Bereiche des Brauchwasser-Wärmespeicherbehälters (3) und des Pufferspeicherbehälters (2) durch eine Schwerkraft-Ausgleichsleitung (19) miteinander verbunden sind, in der ein steuerbares Absperrventil (20) angebracht ist und
daß im "Sommer-Betrieb" (nur Brauchwasserbedarf) das Absperrventil (20) beim Überschreiten einer bestimmten Temperatur im Brauchwasser-Wärmespeicherbehälter (3) geschlossen wird.

14. Wärmespeicher nach einem der Ansprüche 1 bis 13, dadurch gekennzeichnet, daß die für den Wärmespeicher (1) verwendeten Bauteile in einer geschlossenen Wärmedämmschale (46) untergebracht sind.

## Claims

1. Heat accumulator as a buffer store for a room heating system, having a buffer store reservoir (2) which can be filled with heating water as a storage medium, having a forward-flow inlet (21) for connection to at least one heating boiler (33, 34) as an energy generator and a forward-flow outlet (22) for connection to at least one heating circuit (42, 43) as a power-consuming unit, having a return-flow inlet (24) for connection to at least one heating circuit (42, 43) and a return-flow outlet (25) for connection to at least one heating boiler (33, 34); characterized in that the forward-flow inlet (21) and the forward-flow outlet (22) are interconnected by at least one forward-flow pipe (23) which is disposed in the upper region (7) within the buffer store reservoir (2), this forward-flow pipe (23) exhibiting, in scattered arrangement, bores as flow-through openings (47) to the buffer store capacity; in that the return-flow outlet (25) and the return-flow inlet (24) are interconnected by at least one return-flow pipe (26) which is likewise disposed in the upper region within the buffer store reservoir (2), this return-flow pipe (26), just like the forward-flow pipe (23), exhibiting, in scattered arrangement, bores as flow-through openings (47) to the buffer store capacity; and in that a second return-flow outlet (27) is provided in the lower region (10) of the buffer store reservoir (2) as a connection to the buffer store capacity.

2. Heat accumulator according to Claim 1, characterized in that the cross-section of the forward-flow pipe (23) and return-flow pipe (26), respectively, corresponds roughly to the sum of the cross-sections of the flow-through openings (47) made therein.

3. Heat accumulator according to Claim 1 or 2, characterized in that the flow-through openings (47) on the forward-flow pipe (23) and return-flow pipe (26) are situated in a horizontal plane and point away from each other respectively towards the outer side of the buffer store.

4. Heat accumulator according to one of Claims 1 to 3, characterized in that between the forward-flow pipe (23) and the return-flow pipe (26) there is disposed, at least over part of their length, a horizontal intermediate plate (56).

5. Heat accumulator according to one of Claims 1 to 4, characterized in that at least one laminated plate (48, 49) is disposed between an upper region (7) containing the forward-flow pipe (23) and return-flow pipe (26) and a lower, larger region (10) (preferably about 3/4 of the buffer store capacity) of the buffer store reservoir (2) and is provided with flow-through openings (50, 52) between these regions.

6. Heat accumulator according to Claim 5, characterized in that the laminated plate comprises two part-plates (48, 49) which horizontally cover a large part of the accumulator cross-section and are planar and angled in a roof shape towards the centre, where the forward-flow pipe (23) and the return-flow pipe (26) are spaced a short distance apart in comparison with the accumulator diameter.

7. Heat accumulator according to Claim 5 or 6, characterized in that at least one part-plate (48, 49) is guided downwards by virtue of a vertical, lateral wall part (51, 54); and in that the wall part (51, 54) is situated at a distance from the inner wall of the buffer store reservoir (2) and is designed, towards the inner side, having vertically offset flow-through openings (52), thereby producing a vertical flow duct (53, 55).

8. Heat accumulator according to Claim 7, characterized in that the wall parts (51, 54) lie opposite each other; and in that the flow duct (55) which is assigned to the return-flow pipe (26) or is situated below this is connected to the lower return-flow outlet (27).

9. Heat accumulator according to one of Claims 1 to 8, characterized in that the first return-flow outlet (upper return-flow outlet 25) and the second return-flow outlet (lower return-flow outlet 27) are connected by a controllable switch valve (29) which is further connected to the return flow (30) of the heating boiler (33, 34); in that when the heating boiler (33, 34) is switched on and there is a high energy consumption in the connected-up heating circuit(s) (40, 41), corresponding to a registered, large volume current of the heating water in the heating circuits (40, 41) and/or to a registered low return-flow temperature of the heating circuits (40, 41), the switch valve (29) is switched to connect to the upper return-flow outlet (25); in that, when there is a low energy consumption, corresponding to a registered lower volume current of the heating water in the heating circuits (40, 41) and/or to a registered lower return-flow temperature of the heating circuits (40, 41), the switch valve (29) is switched, for a storage and buffering of heating energy, to connect to the lower return-flow outlet (27); and
in that, at a specific buffer store temperature in the buffer store reservoir (2) corresponding to a specific full load-state, the heating boiler (33, 34) is switched off and heating water is drawn only from the buffer store (2) by the heating circuits (40, 41) until a lower load-state of the buffer store (2) is reached, whereupon the heating boiler (33, 34) is switched on again and the switch valve (29) is switched to the upper return-flow outlet (25).

10. Heat accumulator according to Claim 9, characterized in that in the lower region (10) of the buffer store reservoir (2) there is disposed a heat exchanger (12) connected to a solar collector (16); in that at the solar collector (16) the solar irradiation is measured by means of a sensor and, at a specific irradiation value which is sufficient to be utilized, the heating boiler (33, 34) is switched off by a switching arrangement and hot water is drawn by the heating circuits (40, 41) only from the buffer store (2) until a lower buffer store temperature of preferably about 30°C is reached, whereupon the heating boiler (33, 34) is switched on again and the switch valve (29) is switched to the upper return-flow outlet (25); and in that the heating boiler (33, 34) is switched off again whenever, as a result of the supplied solar energy, the registered buffer store temperature has risen to a temperature corresponding to the boiler forward-flow temperature.

11. Heat accumulator according to one of Claims 9 or 10, characterized in that above the buffer store there is additionally disposed an industrial-water heat accumulator, the industrial-water heat accumulator reservoir (3) of which is likewise filled with heating water and is connected to the buffer store reservoir (2); in that in the upper region of the industrial-water heat accumulator reservoir (3) there is disposed at least one high-output heat exchanger (4) in which the industrial water can be heated by the flow principle; in that the upper region (6) of the industrial-water heat accumulator reservoir (3) and the upper region (7) of the buffer store reservoir (2) are directly connected by a forward-flow line (8); in that at the lower region (9) of the industrial-water heat accumulator reservoir (3) there is situated a return-flow outlet (28) which is connected by a return-flow line to a further switch path of the switch valve, which is here configured as controllable four-way switch valve (29); and in that the industrial-water heat accumulator reservoir (3) is preferably temperature-controlled relative to the buffer store reservoir (2) so that, when an energy requirement is registered in the industrial-water heat accumulator reservoir (3), the four-way switch valve (29) is switched to the return-flow outlet (28) of the industrial-water heat accumulator reservoir (3).

12. Heat accumulator according to Claim 11, characterized in that also in the lower region (9) of the industrial-water heat accumulator reservoir (3) there is disposed a heat exchanger (11) for solar energy, which is connected on the forward-flow side (13) to the heat exchanger (12) for solar energy in the buffer store reservoir (2) and is connected on the return-flow side (14) by means of a further controllable switch valve (15); and in that the temperature-controlled industrial-water heat accumulator reservoir (3) is supplied with solar energy, with precedence over the buffer store (2), by appropriate controlling of the switch valve (15).

13. Heat accumulator according to Claim 12, characterized
in that the lower regions of the industrial-water heat accumulator reservoir (3) and of the buffer store reservoir (2) are interconnected by a gravity-equalization line (19) in which a controllable shut-off valve (20) is fitted; and in that, in "summer operation" (industrial-water requirement only), the shut-off valve (20) is closed whenever a specific temperature in the industrial-water heat accumulator reservoir (3) is exceeded.

14. Heat accumulator according to one of Claims 1 to 13, characterized in that the structural parts used for the heat accumulator (1) are housed in a closed heat-insulating casing (46).

## Revendications

1. Accumulateur de chaleur servant d'accumulateur tampon pour un chauffage de locaux, comprenant
un réservoir accumulateur tampon (2) qui peut être rempli d'eau de chauffage en tant que fluide accumulateur,
une entrée d'aller (21) pour son raccordement à au moins une chaudière de chauffage (33, 34) constituant le générateur d'énergie, et une sortie d'aller (22) pour son raccordement a au moins un circuit de chauffage (42, 43) constituant le consommateur,
une entrée de retour (24) pour son raccordement à au moins un circuit de chauffage (42, 43), et une sortie de retour (25) pour son raccordement à au moins une chaudière de chauffage (33, 34),
caractérisé en ce que
l'entrée d'aller (21) et la sortie d'aller (22) sont reliées l'une à l'autre par au moins un tuyau d'aller (23) qui est disposé dans la région supérieure (7) à l'intérieur du réservoir accumulateur tampon (2), ce tuyau d'aller (23) présentant des forures réparties en tant qu'ouvertures de passage (47) vers le volume accumulateur tampon,
la sortie de retour (25) et l'entrée de retour (24) sont reliées l'une à l'autre par au moins un tuyau de retour (26) qui est également disposé dans la région supérieure (7) a l'intérieur du réservoir accumulateur tampon (2), ce tuyau de retour (26) présentant, de même que le tuyau d'aller (23), des forures réparties en tant qu'ouvertures de passage (47) vers le volume accumulateur tampon, et
une seconde sortie de retour (27) est prévue dans la région inférieure (10) du réservoir accumulateur tampon (2) en tant que communication avec le volume accumulateur tampon.

2. Accumulateur de chaleur selon la revendication 1, caractérisé en ce que la section du tuyau d'aller (23) ou du tuyau de retour (26) correspond à peu près à la somme des sections des ouvertures de passage (47) qui y sont pratiquées.

3. Accumulateur de chaleur selon la revendication 1 ou 2, caractérise en ce que les ouvertures de passage (47) qui sont pratiquées dans le tuyau d'aller (23) et celles qui sont pratiquées dans le tuyau de retour (26) sont situées dans un plan horizontal et sont dirigées à l'opposé les unes des autres, respectivement vers les côtés extérieurs de l'accumulateur tampon.

4. Accumulateur de chaleur selon l'une quelconque des revendications 1 à 3, caractérisé en ce qu'une tôle intermédiaire horizontale (56) est disposée entre le tuyau d'aller (23) et le tuyau de retour (26), au moins sur une partie de leur longueur.

5. Accumulateur de chaleur selon l'une quelconque des revendications 1 à 4, caractérise en ce qu'au moins une tôle de stratification (48, 49) est disposée entre une région supérieure (7), contenant le tuyau d'aller (23) et le tuyau de retour (26), et une région inférieure (10) plus grande (de préférence 3/4 environ du volume accumulateur tampon) du réservoir d'accumulateur tampon (2) et est munie d'ouvertures de passage (50, 52) entre ces régions.

6. Accumulateur de chaleur selon la revendication 5, caractérisé en ce que la tôle de stratification se compose de deux tôles partielles (48, 49) qui couvrent horizontalement une grande partie de la section de l'accumulateur et qui sont planes et disposées en forme de toit vers le milieu, où le tuyau d'aller (23) et le tuyau de retour (26) sont disposés à une petite distance l'un de l'autre en comparaison du diamètre de l'accumulateur.

7. Accumulateur de chaleur selon la revendication 5 ou 6, caractérisé en ce qu'au moins une tôle partielle (48, 49) est prolongée vers le bas par une partie de paroi verticale latérale (51, 54), et en ce que la partie de paroi (51, 54) est située à distance de la paroi interne du réservoir accumulateur tampon (2) et est réalisée avec des ouvertures de passage vers le côté intérieur, qui sont décalées verticalement (52), de sorte qu'il en résulte un canal de circulation vertical (53, 55).

8. Accumulateur de chaleur selon la revendication 7, caractérisé en ce que les parties de paroi (51, 54) se font face et en ce que le canal de circulation (55) qui est adjoint au tuyau de retour (26), c'est-à-dire situé au-dessous de celui-ci, est en communication avec la sortie de retour inférieur (27).

9. Accumulateur de chaleur selon l'une quelconque des revendications 1 à 9, caractérisé
en ce que la première sortie de retour (sortie de retour supérieure 25) et la seconde sortie de retour (sortie de retour inférieure 27) sont reliées l'une à l'autre par l'intermédiaire d'une vanne de commutation commandable (29) qui est en outre reliée au retour (30) de la chaudière de chauffage (33, 34),
en ce que, lorsque la chaudière de chauffage (33, 34) est en marche et en cas de forte consommation d'énergie dans le ou les circuits de chauffage (40, 41) raccordés, correspondant à fort débit volumique détecté de l'eau de chauffage dans les circuits de chauffage (40, 41) et/ou a une basse température détectée de retour depuis les circuits de chauffage (40, 41), la vanne de commutation (29) est commutée de manière à être reliée a la sortie de retour supérieure (25),
en ce qu'en cas de faible consommation d'énergie, correspondant à un plus faible débit volumique détecté de l'eau de chauffage dans les circuits de chauffage (40, 41) et/ou à une plus basse température détectée de retour depuis les circuits de chauffage (40, 41), la vanne de commutation (29) est commutée de manière à être reliée a la sortie de retour inférieure (27) en vue d'une accumulation et d'une utilisation comme tampon d'énergie de chauffage, et
en ce qu'à une température déterminée d'accumulation tampon dans le réservoir accumulateur tampon (2), correspondant à un état déterminé de pleine charge, la chaudière de chauffage (33, 34) est arrêtée et l'eau de chauffage n'est prélevée par les circuits de chauffage (40, 41) qu'à partir de l'accumulateur tampon (2), jusqu'a ce qu'un état de charge inférieur de l'accumulateur tampon (2) soit atteint, la chaudière de chauffage (33, 34) étant alors remise en marche et la vanne de commutation (29) étant reliée a la sortie de retour supérieure (25).

10. Accumulateur de chaleur selon la revendication 9, caractérisé
en ce qu'il est disposé, dans la région inférieure (10) du réservoir accumulateur tampon (2), un échangeur de chaleur (12) qui est relié à un collecteur solaire (16),
en ce que le rayonnement solaire incident est mesuré sur le collecteur solaire (16) au moyen d'un détecteur et, en cas de valeur déterminée du rayonnement incident, suffisante pour son exploitation, la chaudière de chauffage (33, 34) est arrêtée par un dispositif de commande et l'eau de chauffage n'est prélevée par les circuits de chauffage (40, 41) qu'à partir de l'accumulateur tampon (2), jusqu'à ce qu'une température inférieure de l'accumulateur tampon, de préférence de 30°C environ, soit atteinte, la chaudière de chauffage (33, 34) étant alors remise en marche et la vanne de commutation (29) étant reliée à la sortie de retour supérieure (25), et
en ce que la chaudière de chauffage (33, 34) est réarrêtée lorsque la température détectée de l'accumulateur tampon est remontée, sous l'effet de l'énergie solaire appliquée, à une température correspondant à la température d'aller de la chaudière.

11. Accumulateur de chaleur selon la revendication 9 ou 10, caractérisé
en ce qu'il est en Plus disposé, au-dessus de l'accumulateur tampon, un accumulateur de chaleur pour de l'eau à usage sanitaire, dont le réservoir (3) accumulateur de chaleur pour eau à usage sanitaire est également rempli d'eau de chauffage et est relié au réservoir accumulateur tampon (2),
en ce qu'il est disposé, dans la région supérieure du réservoir (3) accumulateur de chaleur pour eau à usage sanitaire, au moins un échangeur de chaleur à grand rendement (4), dans lequel l'eau à usage sanitaire peut être chauffée suivant le principe de l'écoulement libre,
en ce que la région supérieure (6) du réservoir (3) accumulateur de chaleur pour eau à usage sanitaire et la région supérieure (7) du réservoir accumulateur tampon (2) sont reliées directement par une conduite d'aller (8),
en ce que dans la région inférieure (9) du réservoir (3) accumulateur de chaleur pour eau à usage sanitaire se trouve une sortie de retour (28) qui est reliée, par une conduite de retour, à une autre voie de la vanne de commutation, laquelle est ici réalisée sous forme de vanne de commutation commandable à quatre voies (29), et
en ce que le réservoir (3) accumulateur de chaleur pour eau à usage sanitaire est réglé en température préférentiellement par rapport au réservoir accumulateur tampon (2), de sorte qu'en cas de besoin d'énergie détecté dans le réservoir (3) accumulateur de chaleur pour eau à usage sanitaire, la vanne de commutation à quatre voies (29) est commutée sur la sortie de retour (28) du réservoir (3) accumulateur de chaleur pour eau à usage sanitaire.

12. Accumulateur de chaleur selon la revendication 11, caractérisé
en ce qu'il est également disposé, dans la région inférieure (9) du réservoir (3) accumulateur de chaleur pour eau à usage sanitaire, un échangeur de chaleur (11) pour énergie solaire, qui est relié du côté de l'aller (13) à l'échangeur de chaleur (12) pour énergie solaire situé dans le réservoir accumulateur tampon (2) et est relié du côté du retour (14) par l'intermédiaire d'une autre vanne de commutation commandable (15), et
en ce que l'accumulateur de chaleur (3) pour eau à usage sanitaire est alimenté en énergie solaire, en priorité par rapport à l'accumulateur tampon (2), par une commande correspondante de la vanne de commutation (15).

13. Accumulateur de chaleur selon la revendication 12, caractérisé
en ce que les régions inférieures du réservoir (3) accumulateur de chaleur pour eau à usage sanitaire et du réservoir accumulateur tampon (2) sont reliées l'une à l'autre par une conduite d'équilibrage par gravité (19) dans laquelle est montée une vanne d'arrêt commandable (20), et
en ce qu'en "marche d'été" (consommation exclusive d'eau à usage sanitaire), la vanne d'arrêt (20) est fermée en cas de dépassement d'une température déterminée dans le réservoir (3) accumulateur de chaleur pour eau à usage sanitaire.

14. Accumulateur de chaleur selon l'une quelconque des revendications 1 à 13, caractérisé en ce que les éléments de construction utilisés pour l'accumulateur de chaleur (1) sont logés dans une enceinte fermée d'isolation thermique (46).
